# EUROPEAN PATENT APPLICATION

(11) **EP 3 557 692 A1**
(43) Date of publication of application: **23.10.2019**
(21) Application number: 18382270.9
(22) Date of filing: 20.04.2018
(51) Int. Cl.: H01Q 1/42, F16B 5/06

(54) **BRACKET FOR FIXING A PANEL TO THE DISH OF A SATELLITE ANTENNA**

(71) Applicant: A. Raymond et Cie, 38000 Grenoble (FR)
(72) Inventor: FERNÁNDEZ, Diego, 38000 Grenoble (FR); FOL, David, 38000 Grenoble (FR)
(74) Representative: Tilmann, Max Wilhelm

(57) **Abstract**

A bracket for attaching a flat object, such as satellite dish cover, to a dish-shaped object, such as a satellite dish, is disclosed. The bracket includes a base and a press part adjustably attached to the base. A portion of the satellite dish is captured between the base and the press part. The bracket further includes a flat object retainer that is adjustably attached to the base. The flat object retainer holds the flat object to the dish-shaped object. The base of the bracket includes a seat against which the front of the dish-shaped object rests. The press part is adjustably attached to the base and includes a press part arm having a pressure dish plate for placement against the back side of the dish-shaped object. The flat object retainer is an elongated strip that includes a flat object slot for receiving and holding an edge of the flat object.

## Description

### TECHNICAL FIELD

The disclosed inventive concept relates generally to brackets for fastening a first item to a second item. More particularly, the disclosed inventive concept relates to a bracket for attaching a cover to the dish of a satellite antenna. The bracket is attached to the dish of the satellite antenna and, once secured, the cover is attached to the bracket. One or more brackets may be used for holding the cover to the dish of the satellite antenna. The bracket may be adjusted to hold covers having a wide variety of sizes and types.

### BACKGROUND OF THE INVENTION

Telecommunications, particularly in the area of television broadcasting, have undergone dramatic changes in the last couple of decades. Television broadcasting, when commercially introduced in the 1940's, relied upon a wireless signal generated by a broadcast tower. The quality of both the image and sound depended upon the strength of the wireless signal and the quality of the antenna attached to the television.

The use of wireless television signals to reach the consumer remained the exclusive method of television broadcast for decades. However, due to the unreliability of television signals, other approaches were considered. One approach, the use of hard-wired cables between the broadcast studio and the receiver, was also introduced in the 1940's. But the use of cable broadcasting was limited at that time and for a long while after to rural areas where conventional wireless broadcast signals were generally unavailable.

Cable broadcasting began to show commercial vitality by the mid-1970's when regular cable broadcasting began to take shape. This form of media had the critical advantage of providing to the television user a consistently strong signal and a broad variety of television broadcasting that was not limited to local programming as was often the case with the wireless broadcast. However, cable television suffered from the disadvantage of requiring that each receiver be hard-wired to a subsurface cable.

In an effort to provide the signal strength and programming variety of cable television, a different approach to television broadcasting developed in the 1990's with the commercial use of satellite television. This form of broadcasting relied on the consumer obtaining a satellite antenna typically in the form of a satellite dish. The satellite dish can be mounted to a variety of surfaces that allow for the dish to be aimed or directed to a selected broadcast satellite fixed in a geostationary orbit.

While providing a practical and unwired solution to the use of cables, the satellite antenna is not without its problems. Once the antenna is securely fixed to a substrate and is aimed properly, a continuing problem is the need to keep dirt and debris off of the dish surface. Such material may interfere with the radio waves that impact the surface and are collected by a receiver, such as a low-noise block downconverter (LNB). Because the satellite antenna is frequently mounted at a point that makes operator access difficult, such as on a roof, the regular cleaning of the dish surface is impractical and sometimes impossible.

In an effort to protect the surface, satellite antennas have been fitted with covers of various types. However, known covers are often difficult to attach and, when attached, may damage the surface because of the attachment structure. Accordingly, an improved approach to attaching a cover protecting the surface of the receiving dish of a satellite antenna is desired.

### SUMMARY OF THE INVENTION

The disclosed inventive concept overcomes the problems associated with known methods of attaching flat objects such as satellite dish covers to dish-shaped objects such as satellite dishes by providing a bracket that is easy to use, of solid construction, and provides a definite and secure attachment of the dish cover to the satellite dish. The bracket of the disclosed inventive concept includes a base and a press part to which the satellite dish is attached. The press part is adjustably attached to the base. A portion of the satellite dish is captured between the base and the press part. The bracket further includes a flat object retainer that is adjustably attached to the base. The flat object retainer holds the flat object to the dish-shaped object.

The base of the bracket includes a seat against which the front of the dish-shaped object rests. The press part is adjustably attached to the base and includes a press part arm having a pressure dish plate for placement against the back side of the dish-shaped object. The flat object retainer is an elongated strip that includes at one end a flat object slot for receiving and holding an edge of the flat object. The flat object retainer is adjustably attached to the base of the bracket.

The bracket of the disclosed inventive concept includes a double ratcheting system. The first ratchet is an adjustable arrangement for attaching the press part to the base. The second ratchet is an adjustable arrangement for attaching the flat object retainer to the base.

The above advantages and other advantages and features will be readily apparent from the following detailed description of the preferred embodiments when taken in connection with the accompanying drawings.

### BRIEF DESCRIPTION OF THE DRAWINGS

For a more complete understanding of this invention, reference should now be made to the embodiments illustrated in greater detail in the accompanying drawings and described below by way of examples of the invention wherein:
FIG. 1 is a perspective view of an exemplary satellite antenna having a cover positioned thereover, the cover being held to the satellite antenna by a pair of opposed brackets according to the disclosed inventive concept;
FIG. 2 is a perspective view of a portion of a satellite antenna having a cover attached thereto by a bracket according to the disclosed inventive concept;
FIG. 3 is a sectional view of a satellite antenna and satellite antenna cover with the satellite antenna cover attached to the satellite antenna by two opposed brackets according to the disclosed inventive concept;
FIG. 4 is an elevated side view of the bracket for fixing a panel to a satellite antenna according to the disclosed inventive concept;
FIG. 5 is an end view of the bracket for fixing a panel to a satellite antenna according of FIG. 4 illustrated from the satellite attachment end;
FIG. 6 is an end view of the bracket for fixing a panel to a satellite antenna according of FIG. 4 illustrated from the satellite cover attachment end;
FIG. 7 is a side view of the base of the bracket for fixing a panel to a satellite antenna according to the disclosed inventive concept;
FIG. 8 is a top view of the base of the bracket for fixing a panel to a satellite antenna according to the disclosed inventive concept;
FIG. 9 is an end view of the base of the bracket for fixing a panel to a satellite antenna according to the disclosed inventive concept;
FIG. 10 is a side view of the press part of the bracket for fixing a panel to a satellite antenna according to the disclosed inventive concept;
FIG. 11 is a side view of the attachment strip of the bracket for fixing a panel to a satellite antenna according to the disclosed inventive concept; and
FIG. 12 is a top view of the attachment strip of the bracket for fixing a panel to a satellite antenna according to the disclosed inventive concept.

### DETAILED DESCRIPTION OF THE PREFERRED EMBODIMENT

As those of ordinary skill in the art will understand, various features of the embodiments illustrated and described with reference to any one of the figures may be combined with features illustrated in one or more other figures to produce alternative embodiments that are not explicitly illustrated or described. The combinations of features illustrated provide representative embodiments for typical applications. However, various combinations and modifications of the features consistent with the teachings of the present disclosure may be desired for particular applications or implementations.

The figures illustrate a system for attaching a cover to the dish of a satellite antenna that incorporates an attachment bracket. The system includes a bracket for attaching the dish cover to the dish of a satellite antenna. The bracket illustrated in the accompanying figures and discussed in relation thereto is suitable for a wide variety of applications that include and go beyond the satellite antenna sector. Particularly, the bracket for attaching the dish cover may be adapted for use in any environment in which a first article, such as a substantially planar cover, is to be attached to a second article, such as any article needing to be protected from dirt or debris. Such environments include, without limitation, roof-top venting systems that would benefit by having a cover positioned over the vent or lighting systems, such as upward-facing outdoor bucket lights, that would benefit by having a clear or translucent cover fixed over the bucket. The bracket of the disclosed inventive concept includes an adjustment feature that may be adapted for attaching covers of many diameters to the satellite dish.

The bracket of the disclosed inventive concept is illustrated as being of a particular shape. It is to be understood that variations of the bracket shape are possible without deviating from the spirit or scope of the present invention. Accordingly, the shape of the bracket as illustrated is intended as being suggestive but not limiting.

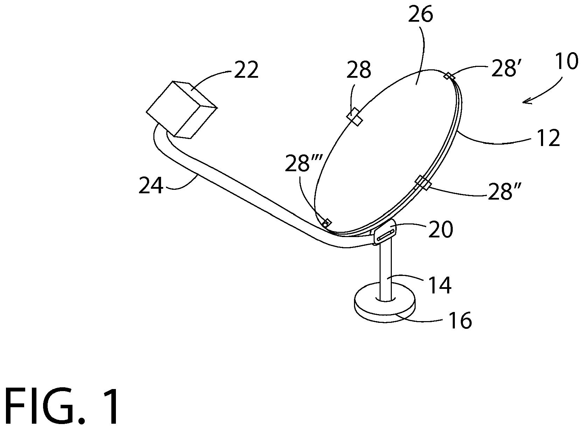

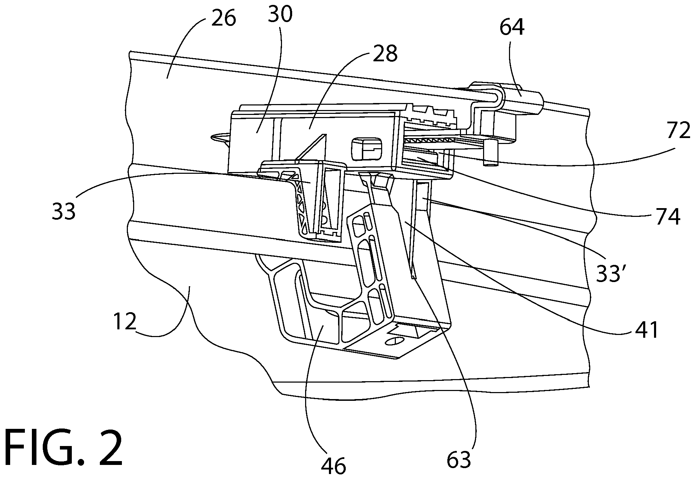

Referring to FIG. 1, a perspective view of an exemplary satellite antenna and cover assembly is shown and is generally illustrated as 10. The satellite and cover assembly 10 is also illustrated in FIG. 2 with certain components being shown in partial sectional view.

Referring to FIGS. 1 and 2, the exemplary satellite antenna and cover assembly 10 includes a conventional satellite antenna in the form of a satellite dish or reflector 12 having a satellite antenna support mast 14 fixed thereto. A satellite antenna support foot 16 is attached to the satellite antenna support mast 14. The satellite antenna support mast 14 may be of any number of shapes and types. The satellite antenna support foot 16 may be attached to a broad variety of substrates such as the ground, a house roof, or a house wall. A mast clamp 20 is attached to the back of the satellite dish 12. The satellite antenna support mast 14 is adjustably attached to the mast clamp 20.

A radio wave collector in the form of a low-noise block downconverter (LNB) 22 is attached to the mast clamp 20 by an LNB arm 24. The low-noise block downconverter 22 is a receiving unit that collects radio waves from the satellite dish 12 and converts the received radio waves to an appropriate electrical signal for use by a cable receiver (not shown).

Attached to the satellite dish 12 is a satellite dish protective cover 26. The illustrated satellite dish protective cover 26 is shown as being of a certain shape and thickness. However, it is to be understood that the satellite dish protective cover 26 may be of a variety of shapes and sizes.

The satellite dish protective cover 26 is attached to the satellite dish 12 by satellite dish attachment brackets 28, 28', 28", and 28"'. A greater or lesser number of attachment brackets may be used. In addition, the illustrated array of satellite dish attachment brackets 28, 28', 28", and 28'" is suggestive and is not intended as being limiting.

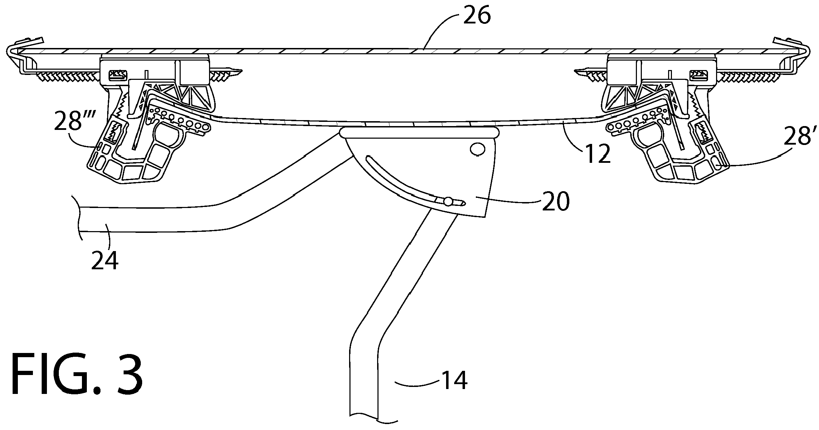

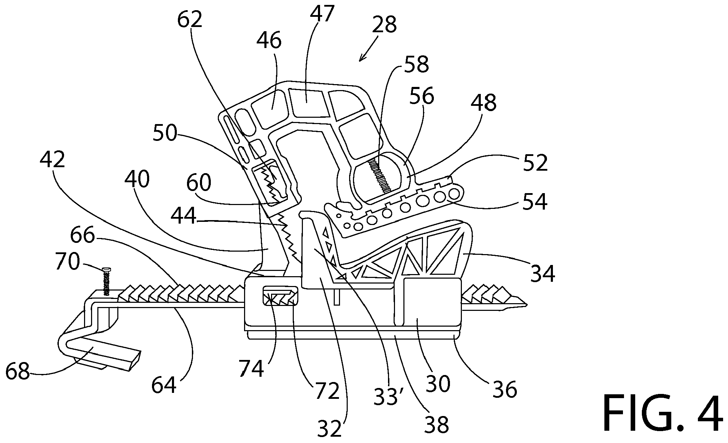

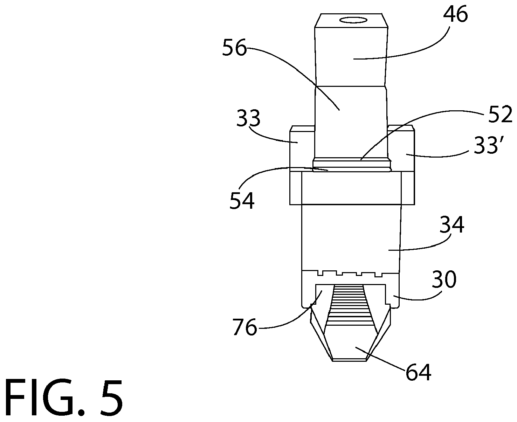

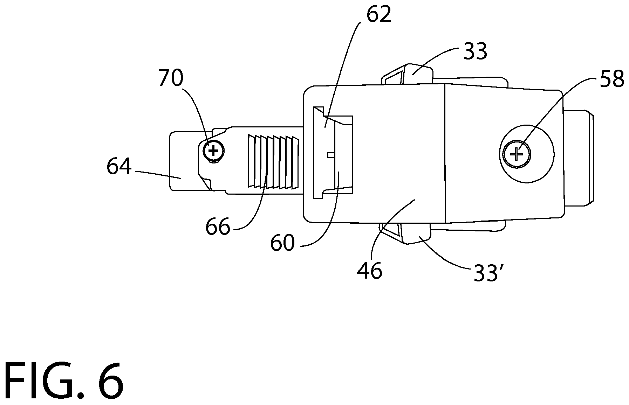

One of the illustrated satellite dish attachment brackets, the satellite attachment bracket 28, is shown in perspective and side views in FIGS. 3 and 4 respectively. In addition, an end view of the satellite attachment bracket 28 is shown in FIG. 5 while an end view of the satellite attachment bracket 28 is shown in FIG. 6. It is to be understood that the satellite dish attachment brackets 28', 28", and 28'" are of the same construction as the described satellite attachment bracket 28.

Referring to FIGS. 3 through 6, the satellite attachment bracket 28 includes three basic components that incorporate a double ratcheting system. The first of the three basic components that comprises the satellite attachment bracket 28 is a base 30. The base 30 serves as the attachment point for both the satellite dish 12 and the satellite dish protective cover 26. The base 30 includes a seat 32 having at least one surface shaped to form-fit the curvature of the satellite dish 12. The seat 32 may include a pair of spaced part satellite dish side support extensions 33 and 33'. The seat 32 is preferably lined with a scratch-preventive material such as an L-shaped rubber liner 34 that covers the seat and the satellite dish side support extensions 33 and 33'. The L-shaped rubber liner 34 may be composed of any elastomeric material that provides both resiliency and support. Preferably the L-shaped rubber liner 34 includes the illustrated open, multi-walled structure thereby making the seat 32 adaptable to a broad variety of satellite dishes having different profiles.

While the seat 32 is illustrated as being lined with the L-shaped rubber liner 34, a liquid coating may also be placed on the seat 32 and allowed to dry. As a further alternative, the seat 32 may include an appropriate scratch-preventive layer formed by a two-shot injection process.

The base 30 further includes a cover-contacting side 36. The cover-contacting side 36 is preferably lined with a scratch-preventive elastomeric material such as an underside layer 38. Like the L-shaped rubber liner 34, the underside layer 38 may be composed of any elastomeric material that provides both resiliency and support.

The base 30 additionally includes a press part attachment structure 40 extending at an angle from a press part attachment structure side 42 formed on the base 30. An attachment structure spine 41 is formed on one side of the press part attachment structure 40. Formed on the other side of the press part attachment structure 40 is a toothed strip 44. The toothed strip 44 is one portion of the double ratcheting system of the satellite dish attachment bracket 28.

The second of the three basic components that comprises the satellite attachment bracket 28 is a press part 46. The press part 46 is slidably attached to the base 30. The press part 46 may be of a variety of shapes although the preferred shape is the illustrated U-shape as this configuration is best suited to apply pressure on the captured satellite dish 12. In addition, the U-shape of the press part 46 is the shape that best adapts to most satellite dish profiles.

The press part 46 includes a press part arm 47, a satellite dish attachment end 48, and a base attachment structure 50. The satellite dish attachment end 48 includes a satellite dish pressure plate 52 that is lined with a scratch-preventive elastomeric material such as a pressure plate layer 54. The pressure plate layer 54 may be selected from an elastomeric resilient material that is able to deform to closely mate with the outer surface of the satellite dish 12 or may be of a form-fitted shape adapted to snugly mate with the curvature of the satellite dish 12. As a further alternative, the pressure plate layer 54 may be coated with a liquid resilient material that is dried before use. A further alternative, the pressure plate layer 54 may include an appropriate scratch-preventive layer formed by a two-shot injection process.

The press part 46 further includes an open tubular portion 56 attached to the press part arm 47. An adjustable threaded bolt 58 extends through part of the press part arm 47, through the open portion of the open tubular portion 56, and against the inner surface of the satellite dish pressure plate 52. The adjustable threaded bolt 58 allows an installer to apply a measured increased amount of pressure against the satellite dish 12 once in position on the seat 32 of the base 30.

The base attachment structure 50 of the press part 46 further includes an internal channel 60 having a toothed flexible arm 62 to receive and capture the toothed strip 44 of the press part attachment structure 40. A slot 63 is formed on the base attachment structure 50 for receiving the attachment structure spine 41 of the base 30. The slot 63 and the attachment structure spine 41 cooperate to maintain proper alignment of the press part 46 on attachment to the base 30.

The third of the three basic components that comprises the satellite attachment bracket 28 is a flat object retainer such as a satellite dish cover attachment strip or structure 64. The satellite dish cover attachment strip or cover retainer 64 is the other portion of the double ratcheting system of the satellite dish attachment bracket 28 in addition to the toothed strip 44 of the base 30.

The satellite dish cover attachment strip 64 includes a toothed surface 66 and a satellite dish cover slot 68 for attachment to the satellite dish cover 26. A fastener 70 is provided to fixedly attach the satellite dish cover attachment strip 64 to the satellite dish cover 26 after an edge of the satellite dish cover 26 has been inserted into the satellite dish cover slot 68.

Formed internally along the long axis of the base 30 is a satellite dish cover attachment strip channel 72. A toothed flexible arm 74 is integrally formed with the base 30. The toothed flexible arm 74 extends into the satellite dish cover attachment strip channel 72 for engagement with the toothed surface 66 of the satellite dish cover attachment strip 64.

The base 30, the press part 46, and the satellite dish cover attachment strip 64 may be composed of a variety of materials. However, it is preferred that each of these three components be composed of a low dielectric material such as a plastic to prevent interference with radio signals.

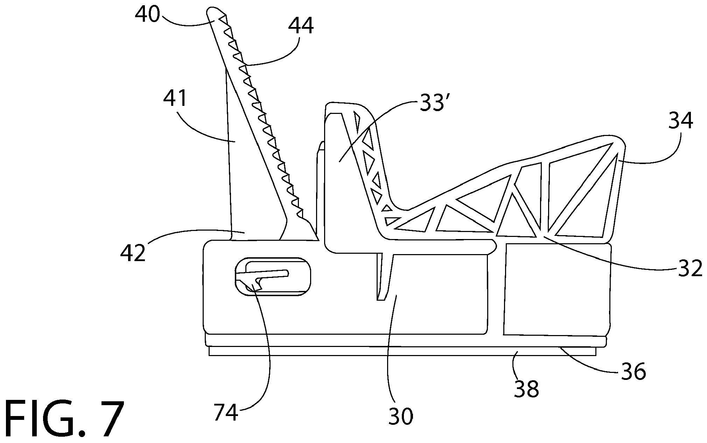

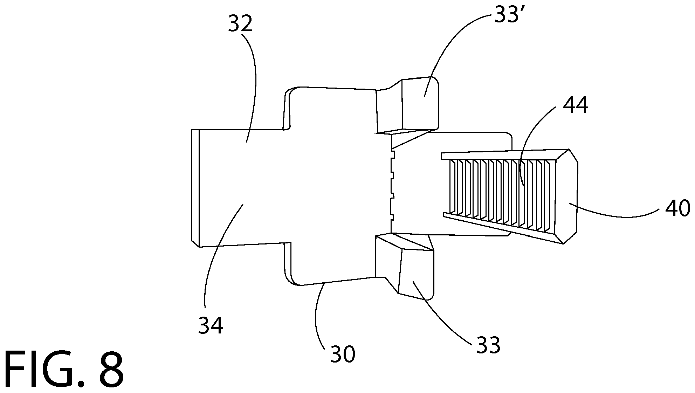

FIGS. 7 through 9 illustrate the base 30 in isolation viewed from the side, the top, and the end. FIGS. 7 and 8 illustrate in supplemental detail the toothed strip 44 of the press part attachment structure 40. FIGS. 7 and 8 also illustrate in supplemental detail the length and extensive adjustability of the toothed strip 44.

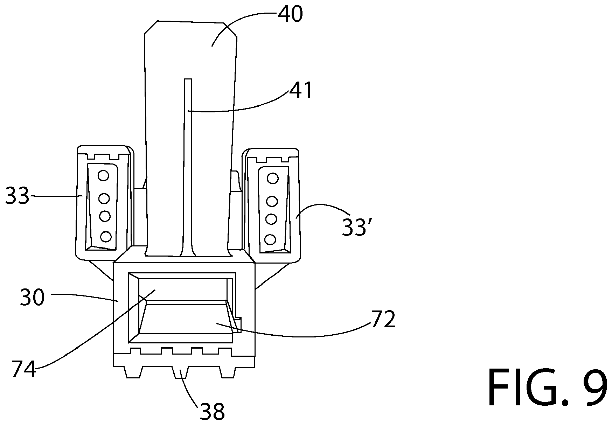

FIG. 8 also includes in supplemental detail the configuration of the seat 32, the associated spaced apart satellite dish side support extensions 33 and 33', and the L-shaped rubber liner 34. FIG. 9 includes in supplemental detail the non-supportive sides of the spaced apart satellite dish side support extensions 33 and 33' as well as the attachment structure spine 41. Also included in supplemental detail in FIG. 9 is the entry end of the satellite dish cover attachment strip channel 72 and the internally-provided toothed flexible arm 74. The satellite dish cover attachment strip 64 is inserted into the open end of the satellite dish cover attachment strip channel 72 illustrated in FIG. 9.

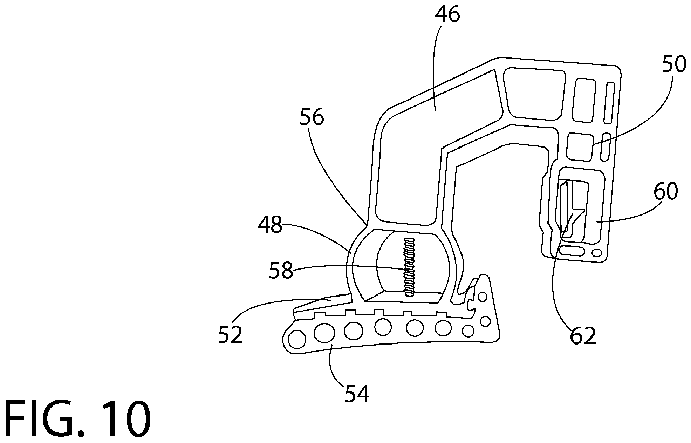

FIG. 10 illustrates the press part 46 in isolation viewed from the side. This figure illustrates in supplemental detail the toothed flexible arm 62 formed in the internal channel 60. FIG. 10 also illustrates the preferable arcuate configuration of the satellite dish pressure plate 52. The arcuate configuration, while not mandatory, is preferable in that it permits the satellite dish pressure plate 52 to more closely align itself to the profile of the back side of the satellite dish 12.

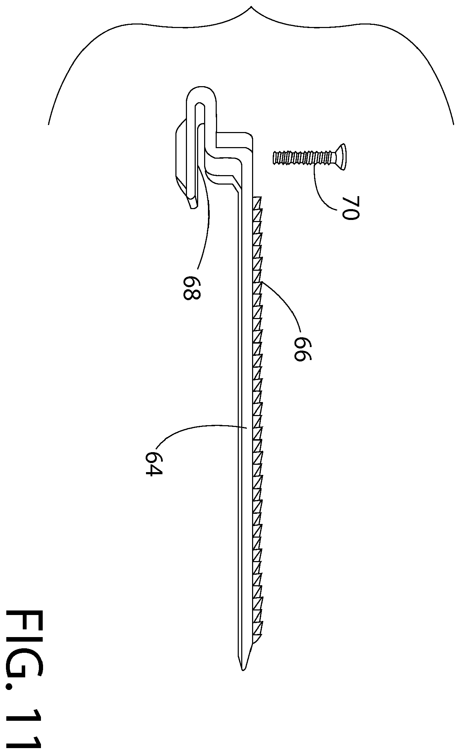

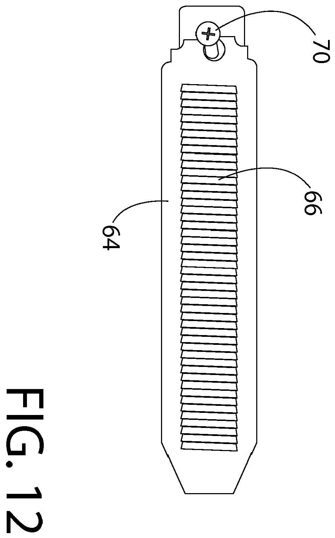

FIGS. 11 and 12 illustrate the satellite dish cover attachment strip 64 viewed from the side and from the top respectively. Both of these figures illustrate in supplemental detail the toothed surface 66 and the satellite dish cover slot 68. The length and extensive adjustability of the satellite dish cover attachment strip 64 are well illustrated in FIGS. 11 and 12.

The disclosed inventive concept provides a satellite attachment bracket for use in easily and securely attaching a satellite dish cover to a satellite dish with no alteration of either the satellite dish cover or the satellite dish. To install the satellite attachment bracket, the installer first places the seat 32 of the base 30 against the outer surface of the satellite dish 12. When correctly positioned, the L-shaped rubber liner 34 rests against the outer surface of the satellite dish 12 and the satellite dish side support extensions 33 and 33' rest against the side wall of the satellite dish.

The press part 46 is then attached to the base 30 by inserting the toothed strip 44 of the press part attachment structure 40 into the internal channel 60 of the press part 46 so that the toothed flexible arm 62 engages the toothed strip 44. The installer continues pressing the press part 46 against the satellite dish 12 until the pressure plate layer 54 is fully positioned against the back side of the satellite dish. The ratcheting arrangement of the toothed strip 44 and the toothed flexible arm 62 prevents reverse movement of the press part 46 relative to the base 30. To more fully press the pressure plate layer 54 against the back side of the satellite dish 12, the installer threads the adjustable threaded bolt 58 so that it presses against the inner wall of the satellite dish pressure plate 52, thereby applying additional pressure to the pressure plate layer 54 against the back side of the satellite dish 12.

Once the base 30 and the press part 46 are securely attached to the satellite dish 12, the installer fits the edge of the satellite dish cover 26 into the satellite dish cover slot 68. Once the edge is inserted, the installer moves the satellite dish cover attachment strip 64 into the satellite dish cover attachment strip channel 72. The toothed flexible arm 74 engages the toothed surface 66 of the satellite dish cover attachment strip 64 and, once correctly positioned within the satellite dish cover attachment strip channel 72, the ratcheting arrangement of the toothed surface 66 and the toothed flexible arm 74 prevents reverse movement of the satellite dish cover attachment strip 64 relative to the base 30. Once the satellite dish cover attachment strip 64 is in position and the satellite dish cover 26 is in a desired position, the installer threads the fastener 70 to fixedly attach the satellite dish cover attachment strip 64 to an edge of the satellite dish cover 26.

Once installed, the satellite attachment bracket provides a durable and reliable arrangement for fixing the satellite dish cover 26 to the satellite dish 12. The satellite attachment bracket 28 is lightweight, weather resistant, and is universally adapted for use with most any satellite dish having a wide variety of profiles. In addition, the satellite attachment bracket 28 may be inexpensively manufactured.

One skilled in the art will readily recognize from such discussion, and from the accompanying drawings and claims that various changes, modifications and variations can be made therein without departing from the true spirit and fair scope of the invention as defined by the following claims.

## Claims

1. A bracket for attaching a flat object to a dish-shaped object, the dish-shaped object having a front side and a back side, the bracket comprising:
a base having a seat against which the front side of the dish-shaped object rests and an underside against which the flat object rests, said base including a press part attachment structure;
a press part including a press part arm having a pressure dish plate for placement against the back side of the dish-shaped object and a base attachment structure, said base attachment structure being attachable to said press part attachment structure of said base; and
a flat object attachment structure attachable to said base.

2. The bracket of Claim 1, wherein said base attachment structure includes a base attachment structure channel, said press part attachment structure being at least partially insertable into said base attachment structure channel.

3. The bracket of Claim 2, wherein said base attachment structure channel includes a press part arm and said press part attachment structure includes press part engagement surface for engagement with said press part arm, said press part engagement surface including a series of teeth.

4. The bracket of Claim 1, wherein said base includes a base channel, said flat object attachment structure being at least partially insertable into said base channel.

5. The bracket of Claim 4, wherein said base channel includes a flat object attachment structure arm and said flat object attachment structure includes a flat object attachment structure surface for engagement with said flat object attachment structure arm, said flat object attachment structure surface including a series of teeth.

6. The bracket of Claim 1, wherein said press part attachment structure of said base includes a spine and said base attachment structure of said press part includes a spine-receiving channel.

7. A bracket for attaching a flat object to a dish-shaped object, the dish-shaped object having a front side and a back side, the bracket comprising:
a base having a seat against which the front side of the dish-shaped object rests and an underside against which the flat object rests;
a press part including a press part arm having a pressure dish plate for placement against the back side of the dish-shaped object, said press part including a base attachment structure for adjustable attachment said base; and
a flat object retainer, said flat object retainer including a base attachment structure for adjustable attachment to said base.

8. The bracket of Claim 7, wherein said base includes a press part attachment structure and said press part includes a base attachment structure channel, said press part attachment structure being at least partially insertable into said base attachment structure channel.

9. The bracket of Claim 8, wherein said base attachment structure channel includes a press part arm and said press part attachment structure includes press part engagement surface for engagement with said press part arm, said press part engagement surface including a series of teeth.

10. The bracket of Claim 7, wherein said base includes a base channel, said flat object retainer being at least partially insertable into said base channel.

11. The bracket of Claim 10, wherein said base channel includes a flat object retainer arm and said flat object retainer includes a flat object engagement surface for engagement with said flat object retainer arm, said flat object engagement surface including a series of teeth.

12. The bracket of Claim 7, wherein said press part is U-shaped.

13. The bracket of Claim 7, wherein said base includes a spine and said base attachment structure of said press part includes a spine-receiving channel.

14. A method of using a bracket to attach a flat object to a dish-shaped object, the dish-shaped object having a front side and a back side, the method comprising:
forming a bracket having a base, a press part, and a flat object retainer, said base having a seat and an underside against which the flat object rests, said press part including a press part arm having a pressure dish plate for placement against the back side of the dish-shaped object, said press part including a base attachment structure for adjustable attachment said base, and said flat object retainer including a base attachment structure for adjustable attachment to said base;
positioning a portion of the front side of the dish-shaped object against said seat;
moving said pressure dish plate of said press part arm against the back side of said dish-shaped object;
fitting said flat object retainer to the flat object; and
adjustably attaching said base attachment structure of said flat object retainer to said base.

15. The method of using a bracket according to Claim 14, wherein said press part is U-shaped.
